# EUROPEAN PATENT SPECIFICATION

(11) **EP 4 058 496 B1**
(45) Date of publication and mention of the grant of the patent: **03.09.2025**
(21) Application number: 20800135.4
(22) Date of filing: 03.11.2020
(51) Int. Cl.: C08G 18/16, C08G 18/20, C08G 18/22, C08G 18/28, C08G 18/73, C08G 18/75, C08G 18/79, C08G 18/80, C09D 175/04

(54) **SILANE-BASED COATING COMPOSITIONS COMPRISING A METAL ALKOXIDE CATALYST**
SILANBASIERTE BESCHICHTUNGSZUSAMMENSETZUNGEN MIT EINEM METALL-ALKOXID-KATALYSATOR
COMPOSITIONS DE REVÊTEMENT À BASE DE SILANE COMPRENANT UN CATALYSEUR D'ALCOXYDE MÉTALLIQUE

(30) Priority: 15.11.2019 EP 19209382
(43) Date of publication of application: 21.09.2022
(73) Proprietor: BASF Coatings GmbH, 48165 Münster (DE)
(72) Inventor: WINSBERG, Jan, 48165 Münster (DE); HOMANN, Karin, 48165 Münster (DE); WESSLING, Elisabeth, 48165 Münster (DE)
(74) Representative: BASF IP Association
(86) International application number: PCT/EP2020/080764
(87) International publication number: WO 2021/094130

(56) References cited:
- WO-A1-2016/202587
- DE-A1- 102004 050 747
- DE-A1- 102010 015 675

## Description

The present invention relates to silane-based coating compositions, particularly clearcoat compositions, comprising a metal alkoxide catalyst. Furthermore, the present invention relates to silane-based coating compositions, particularly clearcoat compositions, comprising a silane-based compound having two different alkoxysilane moieties. Moreover, the present invention relates to a method of coating substrates with such coating compositions.

### State of the art

In today's clearcoat industry, the application of isocyanates as crosslinkers and tin catalysts becomes more and more undesired because legal classifications and maximum permissible values are getting critical.

However, polyisocyanates are commonly used crosslinker materials in many coating systems, especially clearcoats. Reasonable alternatives that fulfill future environmental, health and safety requirements, and also technological minimum requirements are not yet available. In order to increase the economic efficiency of the coating process, quickly low-temperature-curing coating systems are desired.

However, coatings based solely on the condensation of alkoxy silanes show often unfavored properties like severe post curing and brittle films, which made them unsuitable as clearcoats in automotive applications. Especially, automotive refinish applications require tailormade clearcoats due to the application of non-crosslinked basecoats.

Good performing alkoxy-silane-crosslinked clearcoats for automobile applications in general and particularly for refinish applications are not yet available, since important parameters like fast curing, quick sandability and polishability, scratch resistance, good appearance, interlayer adhesion and resistance to humidity and UV irradiation can currently not be sufficiently achieved with said clearcoats.

EP 2 641 925 A1 discloses coating compositions containing adducts of isocyanatoalkyl trialkoxysilanes with diols. These adducts were however used in the examples of EP 2 641 925 A1 together with high amounts of polyacrylate polyols. When used as sole resin with suitable crosslinking catalysts, for example potassium neodecanoate and DBU, these adducts show a comparably long tack free time and bad cross-cut adhesion, even before carrying out a constant climate test.

WO 03/054049 discloses isocyanato-functional silanes as adhesion promotors in polyurethane-based adhesives or coating materials. However, these silanes are isocyanate containing, which is to be avoided in the present invention.

JP-A-2005 015644 describes adducts of polyisocyanates with aminosilanes at an NCO to OH ratio from 1:0.05 to 1:0.9, i.e. with an excess of isocyanate groups. These adducts are used in curable resin compositions together with further resins.

Coating compositions comprising the adduct of an aminosilane and a polyisocyanate in combination with catalysts in form of metal carboxylates or a metal alkoxide are also known from DE 10 2010 015675 A1, WO 2016/202587 A1 and DE 10 2004 050747 A1.

Of advantage accordingly would be a preferably isocyanate-free coating composition, preferably clearcoat composition, which has improved resistance against humidity exposure and which can be cured at low temperatures. The obtained coatings should exhibit good mechanical and optical properties. Furthermore, tin containing catalysts should not be needed.

### Object

The object of the present invention, accordingly, was that of providing a fast curing coating composition, preferably clear coating composition, which can be cured at low temperatures without the use of isocyanate or aminoplast crosslinkers and tin containing catalysts. The coating composition should be particularly suitable in automotive coating such as automotive OEM and automotive refinish coating. The coating should have a high pot life and should exhibit improved resistance against humidity exposure. The coatings obtained from said coating composition should be solvent resistant, exhibiting good adhesion, scratch resistance as well as UV and weathering resistance, a high gloss and a good appearance.

### Technical solution

The objects described above are achieved by the subject matter claimed in the claims and also by the preferred embodiments of that subject matter that are described in the description hereinafter.

A first subject of the present invention is therefore a coating composition comprising:
a) at least one silane-based compound R1 having an isocyanate content of less than 1 % and comprising at least one silane group of general formula (I)

   *-NR¹X-SiR²ₐ(OR³)₃₋ₐ (I)

   and optionally at least one silane group of general formula (II)

   *-N[X-SiR²ₐ(OR³)₃₋ₐ]ₙ[X'-SiR²_{b}(OR³)_{3-b}]ₘ (II)

   wherein
   - X, X': are, independently from each other, linear and/or branched alkylene or cycloalkylene radicals having 1 to 20 carbon atoms;
   - R¹: is an alkyl group containing 1 to 10 carbon atoms,
   - R², R³: are, independently from each other, alkyl, cycloalkyl, aryl, or aralkyl groups, it being possible for the carbon chain of the alkyl, cycloalkyl, aryl, or aralkyl groups to be interrupted by nonadjacent oxygen, sulfur or NRₐ groups, where Rₐ is alkyl, cycloalkyl, aryl, or aralkyl,
   - n, m: being, independently from each other, 0 to 2, with the proviso that m+n = 2,
   - a, b: being, independently from each other, 0 to 2;
b) at least one catalyst C1 of general formula (III)

   z [C(R⁴)(R⁵)(R⁶)-(CH₂)ₙ-C(=O)-O⁻] M^{z+} (III)

   wherein
   - R⁴ to R⁶: are, independently from each other, hydrogen or alkyl groups containing 1 to 6 carbon atoms, with the proviso that the sum of the number of carbon atoms in residues R⁴ to R⁶ ranges from 3 to 8;
   - z: being 1 to 4; and
   - n: being 0 or 1 to 8
   with the proviso that,
   if z = 1, then M is selected from the group consisting of Li, K and Na;
   if z = 2, then M is selected from the group consisting of Zn and Zr;
   if z = 3, then M is selected from the group consisting of Bi and Al;
   if z = 4, then M is selected from the group consisting of Zr and Ti;

a) at least one metal alkoxide C2; and
b) one or more aprotic organic solvents.

The above-specified coating compositions are hereinafter also referred to as coating compositions of the invention and accordingly are a subject of the present invention. Preferred embodiments of the coating compositions of the invention are apparent from the description hereinafter and also from the dependent claims.

In light of the prior art it was surprising and unforeseeable for the skilled worker that the object on which the invention is based could be achieved by using a specific silane-based compound R1 in combination with a specific catalyst mixture C1 and C2 in the coating composition. The use of said silane-based compounds R1 in combination with the specific catalyst(s) results in low curing coating compositions which provide coating layers having excellent mechanical and optical properties without the use of isocyanate and aminoplast crosslinkers and tin containing catalysts. Thus, the inventive coating compositions are especially suitable for OEM repair and refinish applications where low curing temperatures are used. By using a metal alkoxide C2 in combination with catalyst C1 of general formula (III) and silane-based compound R1, the resistance of the resulting clearcoat layer to humidity exposure can be improved.

A further subject of the present invention is a method for forming a coating on a substrate (S) comprising the following steps:
(1) applying an inventive coating composition on the substrate (S);
(2) forming a coating film from the coating composition applied in step (1); and
(3) curing the coating film formed in step (2).

### Detailed description

The measurement methods to be employed in the context of the present invention for determining certain characteristic variables can be found in the Examples section. Unless explicitly indicated otherwise, these measurement methods are to be employed for determining the respective characteristic variable. Where reference is made in the context of the present invention to an official standard without any indication of the official period of validity, the reference is implicitly to that version of the standard that is valid on the filing date, or, in the absence of any valid version at that point in time, to the last valid version.

The term "silane-based compound" refers to compounds comprising at least one silane group of formula (I) or (II) described above. Said silane-group is attached via the * symbol to a skeleton of the compound preferably through an urea linkage. As used herein, the "skeleton" of the compound is the portion of the compound other than structure (I) and optionally (II). When a suitable skeleton of the compound is a polymer, the silane groups (I) and optionally (II) may be pendent from the polymer chain, or they may be incorporated into the polymer chain, or a combination thereof.

The term "poly(meth)acrylate" refers both to polyacrylates and to polymethacrylates. Poly(meth)acrylates may therefore be composed of acrylates and/or methacrylates and may comprise further ethylenically unsaturated monomers such as styrene or acrylic acid, for example.

The term "aliphatic" as used herein includes the term "cycloaliphatic" and refers to nonaromatic groups, moieties and compounds, respectively.

All film thicknesses reported in the context of the present invention should be understood as dry film thicknesses. It is therefore the thickness of the cured film in each case. Hence, where it is reported that a coating material is applied at a particular film thickness, this means that the coating material is applied in such a way as to result in the stated film thickness after curing.

All temperatures elucidated in the context of the present invention should be understood as the temperature of the room in which the substrate or the coated substrate is located. It does not mean, therefore, that the substrate itself is required to have the temperature in question.

### Inventive coating compositions:

The inventive coating compositions each comprise at least one aprotic solvent and are therefore preferably solvent-based coating compositions. In the context of the present invention, a solvent-based coating composition preferably comprises a total amount of water and/or protic solvents of less than 10 wt.-%, preferably less than 5 wt.-%, more preferably less than 1 wt.-%, very preferably 0 wt.-%, based in each case on the total weight of the coating composition.

Inventive coating composition comprising the silane-based compound R1 and catalyst mixture C1 and C2:

### Silane-based compound R1 (a):

The inventive coating composition comprises as first mandatory component (a) at least one silane-based compound R1 having an isocyanate content (also called NCO content hereinafter) of less than 1 % and comprising at least one silane group of general formula (I)

*-NR¹ X-SiR²ₐ(OR³)₃₋ₐ (I)

and optionally at least one silane group of general formula (II)

*-N[X-SiR²ₐ(OR³)₃₋ₐ]ₙ[X'-SiR²_{b}(OR³)_{3-b}]ₘ (II)

wherein
R¹ to R³, X, X', a, b, m and n are as previously defined. The silane groups of formula (I) and (II) are bound via the *-symbol to the skeleton of the silane-based compound R1 as previously described.

The silane-based compound R1 preferably comprises an isocyanate content of less than 0.5 %, more preferably of 0.05 to 0 %. This ensures that the silane-based compound R1 does only comprise a rather low amount of free NCO groups or is essentially free of NCO groups, thus allowing to use this compound in isocyanate-free coating compositions.

The reactivity of organofunctional silanes can be influenced considerably by the length of the spacers X, X' between silane functionality and organic functional group serving for reaction with the skeleton of the silane-based compound R1. X and X' in general formula (I) and (II) preferably represent, independently from each other, a linear alkylene radical having 1 to 10, more preferably 1 to 6, even more preferably 2 to 5, very preferably 3, carbon atoms.

R¹ in general formula (I) is preferably an alkyl group containing 2 to 8 carbon atoms, more preferably 4 to 6 carbon atoms, very preferably 4 carbon atoms.

The respective preferred alkoxy radicals (OR³) influence the reactivity of the hydrolyzable silane groups. Particularly preferred are radicals R³ which raise the reactivity of the silane groups, i.e., which constitute good leaving groups. Thus a methoxy radical is preferred over an ethoxy radical, which is preferred in turn over a propoxy radical. With particular preference, therefore, R³ in formula (I) and (II) represent, independently from each other, a C₁-C₁₀ alkyl group, more preferably a C₁-C₆ alkyl group, very preferably a C₁ alkyl group.

The silane group of general formula (II) comprises two alkoxysilane moieties, thus the sum of n and m is 2. The respective alkoxysilane moieties can be the same or can differ from each other. In case of different alkoxysilane moieties, R³ and R⁴ are different if m = n = 1. In case of the same alkoxysilane moieties, either R³ and R⁴ are the same and m = n = 1 or m = 0 and n = 2 or vice versa.

Preferred silane groups of general formula (I) and, if present, silane groups of formula (II), each comprise three alkoxy moieties. Therefore, a in formula (I) and (II) and b in formula (II) favorably are, independently from each other, 0.

The silane-based compounds R1 (a) can be prepared by reacting at least one polyisocyanate with at least one compound of general formula (Ia)

HNR¹-X-SiR²ₐ(OR³)₃₋ₐ (Ia)

and optionally with at least one compound of general formula (IIa)

HN[X-SiR²ₐ(OR³)₃₋ₐ]ₙ[X'-SiR²_{b}(OR³)_{3-b}]ₘ (IIa).

R¹ to R³, X, X', a, b, m and n in general formulas (Ia) and (IIa) are as previously defined.

In principle, all aliphatic, cycloaliphatic, araliphatic and aromatic polyisocyanates can be used as polyisocyanates. Examples of polyisocyanates used preferably are as follows: 2,4-toluene diisocyanate, 2,6-toluene diisocyanate, diphenylmethane 4,4'-diisocyanate, diphenylmethane 2,4'-diisocyanate, p-phenylene diisocyanate, biphenyl diisocyanates, 3,3'-dimethyl-4,4'-diphenyl diisocyanate, tetramethylene 1,4-diisocyanate, hexamethylene 1,6-diisocyanate, 2,2,4-trimethylhexane 1,6-diisocyanate, isophorone diisocyanate, ethylene diisocyanate, 1,12-dodecane diisocyanate, cyclobutane 1,3-diisocyanate, cyclohexane 1,3-diisocyanate, cyclohexane 1,4-diisocyanate, methylcyclohexyl diisocyanates, hexahydrotoluene 2,4-diisocyanate, hexahydrotoluene 2,6-diisocyanate hexahydrophenylene 1,3-diisocyanate, hexahydrophenylene 1,4-diisocyanate, perhydrodiphenylmethane 2,4'-diisocyanate, 4,4'-methylenedicyclohexyl diisocyanate (e.g., Desmodur^{®} W from Covestro AG), tetramethylxylyl diisocyanates (e.g., TMXDI^{®} from American Cyanamid), and mixtures of the aforementioned polyisocyanates. Further-preferred polyisocyanates are the polyisocyanates derived from a polyisocyanate by trimerization, dimerization, urethanization, biuretization or allophanatization. Polyisocyanates used with particular preference are hexamethylenediisocyanate uretdione, hexamethylenediisocyanate, 1-isocyanato-4-[(4-isocyanatocyclohexyl)-methyl]-cyclohexane and hexamethylene diisocyanate trimer.

Inventively preferred compounds (Ia) are aminoalkyltrialkoxysilanes, such as preferably 2-aminoethyltrimethoxysilane, 2-aminoethyltriethoxysilane, 3-aminopropyltrimethoxysilane, 3-aminopropyltriethoxysilane, 4-aminobutyltrimethoxysilane, 4-aminobutyltriethoxysilane. Particularly preferred compounds (Ia) are N-(2-(trimethoxysilyl)ethyl)alkylamines, N-(3-(trimethoxysilyl)propyl)alkylamines, N-(4-(trimethoxysilyl)butyl)alkylamines, N-(2-(triethoxysilyl)ethyl)alkylamines, N-(3-(triethoxysilyl)-propyl)alkylamines and/or N-(4-(triethoxysilyl)butyl)alkylamines. Particularly preferred amino silanes of formula (Ia) are alpha-amino silanes (X = CH₂) and gamma-amino silanes (X = n-propyl), the gamma-amino silanes being most preferred in the present invention. Particularly preferred are N-alkylamino-alkyl-trialkoxysilanes amongst which n-alkylamino-propyl trimethoxy silanes are most preferred such as n-butylamino-propyl-trimethoxysilane. Aminosilanes of this kind are available, for example, under the brand name DYNASYLAN^{®} from DEGUSSA or Silquest^{®} from Momentive.

Preferred compounds (IIa) are bis (2-ethyltrimethoxysilyl) amine, bis (3-propyltrimethoxysilyl) amine, bis (4-butyltrimethoxysilyl) amine, bis (2-ethyltriethoxysilyl) amine, bis (3-propyltriethoxysilyl) amine and / or bis (4-butyltriethoxysilyl) amine. Very particular preference is given to bis (3-propyltrimethoxysilyl) amine.

Preferred compounds (IIa) are available for example under the brand name DYNASILAN^{®} from DEGUSSA or Silquest^{®} from Momentive.

The reaction of the at least one polyisocyanate with compound of general formula (Ia) and optionally compound of general formula (IIa) can be carried out without solvent or in the presence of an aprotic solvent until essentially all, preferably all, free isocyanate groups of the at least one polyisocyanate are consumed. The reaction preferably takes place preferably in inert gas at temperatures of not more than 100° C, preferably at not more than 60° C.

It is preferred according to the invention if the silane-based compound R1 contains 50 to 100 mol %, preferably 80 to 100 mol %, more preferably 95 to 100 mol %, of at least one silane group of general formula (I) and 0 to 50 mol %, preferably 0 to 20 mol %, more preferably 0 to 5 mol %, of at least one silane group of general formula (II), based in each case on the entirety of the silane groups of general formulae (I) and (II). It has been found that in particular the ratio of silane groups of general formula (I) to the silane groups of general formula (II) has a quite critical influence on the occurrence of cracks in the resultant coating. In this relationship, generally speaking, the occurrence of cracks in the resultant coatings increases with decreasing fraction of monosilane groups of general formula (I) and with increasing fraction of bissilane groups of general formula (II). Thus, particularly preferred silane-based compound R1 contain 100 mol-% of silane groups of general formula (I) and 0 mol-% of silane groups of general formula (II).

Very surprising, and also highly advantageous, is the fact that, simultaneously with the decrease of the occurrence of cracks through an increasing fraction of monosilane groups of general formula (I) and a decreasing fraction of bissilane groups of general formula (II), there is only a very slight deterioration in the scratch resistance of the resultant coating.

The silane-based compound R1 is preferably present in a total amount of 25 to 95 wt.-%, more preferred 35 to 90 wt.-% and most preferred from 40 to 80 wt.-%, based in each case on the total weight of the coating composition. This amount of silane-based compound R1, which is employed in the coating composition, is the calculated theoretical amount of the silane-based compound R1 based on the proviso that the sum of the weights of reactants employed in the production of silane-based compound R1 equals the final weight of the silane-based compound R1.

### Catalyst C1 of general formula (III) (b):

The inventive coating composition comprises as second mandatory component (b) at least one catalyst C1 of general formula (III)

z [C(R⁴)(R⁵)(R⁶)-(CH₂)ₙ-C(=O)-O⁻] M^{z+} (III)

wherein
- R⁴ to R⁶: are, independently from each other, hydrogen or alkyl groups containing 1 to 6 carbon atoms, with the proviso that the sum of the number of carbon atoms in residues R⁴ to R⁶ ranges from 3 to 8;
- z: being 1 to 4; and
- n: being 0 or 1 to 8
with the proviso that,
if z = 1, then M is selected from the group consisting of Li, K and Na;
if z = 2, then M is selected from the group consisting of Zn and Zr;
if z = 3, then M is selected from the group consisting of Bi and Al;
if z = 4, then M is selected from the group consisting of Zr and Ti.

The sum of the number of carbon atoms in residues R⁴ to R⁶ in general formula (III) is preferably from 3 to 5 or from 5 to 8.

z in general formula (III) is preferably 1, 3 or 4, more preferably 1 or 4.

n in general formula (III) is preferably 0 or 2 to 6, preferably 0 or 4. If n is 0, residues R⁴ and R⁵ in general formula (III) are, independently from each other, linear or branched C₃-C₅ alkyl groups and residue R⁶ is a methyl group, with the proviso that the sum of all carbon atoms of residues R⁴ to R⁶ is 8. If n in general formula (III) is 1 to 8, preferably 4, residues R⁴ to R⁶ are, independently from each other, methyl groups.

M in general formula (III) is preferably potassium, lithium or titanium, preferably potassium or titanium.

Particularly preferred catalysts C1 of general formula (III) are neodecanoates and/or ethylhexanoates of potassium, lithium or titanium, preferably potassium (I) neodecanoate, potassium (I) 2-ethylhexanoate, titanium (IV) neodecanoate or titanium (IV) 2-ethylhexanoate. Very preferably, exactly one catalyst C1, with particular preference potassium (I) neodecanoate, titanium (IV) neodecanoate or titanium (IV) 2-ethylhexanote, is contained in the inventive coating compositions. The use of titanium (IV) 2-ethylhexanoate is particularly preferred because the resulting coating layers show a significantly improved appearance.

Often, the catalysts C1 of formula (III) are supplied by manufacturers in acid stabilized form. It is preferred to use such acid-stabilized catalysts C1 of formula (III), not only because of their higher storage stability, but also because they introduce free acid into the coating composition according to the present invention. Such free acids are known to be beneficial in combination with the catalysts C2 and can, in addition, improve silane hydrolysis and consequently the network formation. The stabilizing acid is generally the protonated residue C(R⁴)(R⁵)(R⁶)-(CH₂)ₙ-C(=O)-OH contained in general formula (II). If the supply form of the catalyst C1 contains the stabilizing acid C(R⁴)(R⁵)(R⁶)-(CH₂)ₙ-C(=O)-OH, the content of this acid is subsumed under the carboxylic acids of formula (IV) as described later on.

The amount of the at least one catalyst C1, particularly potassium neodecanoate or titanium neodecanoate, preferably ranges from 1 mmol to 50 mmol, more preferred from 5 mmol to 40 mmol and most preferred from 15 to 25 mmol metal, based in each case on 100 g silane-based compound R1 solid.

### Metal alkoxide C2 (c):

The inventive coating composition comprises as third mandatory component (c) at least one metal alkoxide. Said metal alkoxide is used as co-catalyst and results - in combination with catalyst C1, preferably potassium neodecanoate or titanium neodecanoate - in an improved resistance to humidity conditions as compared to compositions comprising nitrogen compounds, such as DBU, as co-catalyst. Without wishing to be bound to any specific theory, it is assumed that the titanium alkoxide can participate in the condensation reaction of the silane-based compound R1 during curing.

The at least one metal alkoxide C2 is preferably selected from metal alkoxides of the general formula (IV)

M¹[(OR⁷)ₘ(R⁸)ₙ₋ₘ]ₙ (IV)

wherein
- R⁷: is a linear or branched C₁ to C₁₀ alkyl group,
- R⁸: is a halogen group, an acetylacetonate group, an alkyl acetoacetate group or an ethanolaminato group,
- M¹: represents at least one metal selected from silicon, titanium, tantalum, zirconium, boron, aluminum, magnesium or zinc,
- m: is an integer from 0 to 4, and
- n: represents a valence of 2 to 5 of M¹.

R⁷ in general formula (IV) is preferably selected from a C₃ to C₅ alkyl group, more preferably from a C₃ or a C₄ alkyl group.

R⁸ in general formula (IV) is preferably an alkyl acetoacetate group, more preferably an ethyl acetoacetate group.

m in general formula (IV) is preferably 0 or 1 to 4, more preferably 0 or 2 to 4, very preferably 0, 2 or 4.

M¹ in general formula (IV) is preferably a metal selected from titanium and n represents a valence of 4.

Particularly preferred catalysts C2 are selected from titanium (IV) isopropoxide and/or titanium (IV) n-butoxide and/or titanium (IV) bis(ethylacetoacetate)diisopropoxide.

The at least one metal alkoxide C2, preferably metal alkoxides of general formula (III), is preferably present in a total amount of 2.5 to 40 mmol metal, based in each case on 100 g silane-based compound R1 solid.

The metal to metal ratio of catalyst C1 of general formula (II) to the at least one metal alkoxide C2, preferably the metal alkoxide of general formula (III), is preferably from 1:2 to 2:1. Use of said catalyst mixture in the afore-stated ratios results in improved resistance to humidity conditions, thus significantly reducing the blistering and whitening of a cured coating layer obtained from the inventive coating composition after exposure to humidity conditions as compared to cured coating layers being prepared by using a nitrogen containing co-catalyst, for example DBU, instead of the metal alkoxide C2.

### Aprotic solvent (d):

The inventive coating composition is a solvent-based coating composition and therefore comprises as fourth mandatory component (d) at least one aprotic solvent. The aprotic solvents in the coating composition are chemically inert toward the silane-based compound R1, i.e. they do not react with the silane-based compound R1 during storing and curing of the inventive coating composition.

Suitable aprotic solvents are selected from aliphatic and/or aromatic hydrocarbons, such as toluene, xylene, solvent naphtha, Solvesso 100 or Hydrosol^{®} (from APAL), ketones, such as acetone, methyl ethyl ketone or methyl amyl ketone, esters, such as ethyl acetate, butyl acetate, pentyl acetate or ethyl ethoxypropionate, ethers, or mixtures of the afore-mentioned solvents. The aprotic solvents or solvent mixtures preferably have a water content of not more than 1% by weight, more preferably not more than 0.5% by weight, based on the solvent. However, some additives or catalysts used herein are sold in protic organic solvents, therefore, in some cases, it cannot be avoided to introduce some unwanted protic solvents, unless a solvent exchange is carried out before their use. If the amount of such protic solvents is kept in the above limits, such amounts can typically be neglected. If undesired premature crosslinking occurs due to the presence of protic solvents, e.g. introduced by additives, such additives are preferably introduced into the coating composition just prior to the application of the coating composition. Another possibility is to perform a solvent-exchange.

As previously mentioned, the inventive coating composition preferably comprises water and/or protic solvents in an amount of less than 10 wt.-%, preferably less than 5 wt.-%, more preferably less than 1 wt.-%, very preferably 0 wt.-%, based in each case on the total weight of the coating composition. Since the silane-based compound R1 is reacting with water and protic solvents, said solvents are preferably not present in order to maximize the pot life and storage stability of the inventive coating composition.

The aprotic solvents are typically introduced by using a solution or dispersion of the silane-based compound R1 in the aprotic solvent or mixtures of aprotic solvents. Further amounts are introduced to adjust the viscosity of the coating composition to a suitable application viscosity. The at least one aprotic solvent is preferably present in a total amount 1 to 70 wt.-%, more preferred 20 to 60 wt.-% and most preferred from 30 to 50 wt.-%, based in each case on the total weight of the coating composition.

### Further optional components of the inventive coating compositions:

### Carboxylic acid of general formula (V):

The inventive coating compositions can further comprise at least one carboxylic acid of general formula (V)

C(R⁴)(R⁵)(R⁶)-(CH₂)ₙ-C(=O)-OH (V)

wherein
- R⁴ to R⁶: are, independently from each other, hydrogen or alkyl groups containing 1 to 6 carbon atoms, with the proviso that the sum of the number of carbon atoms in residues R⁴ to R⁶ is from 3 to 8, preferably 5 to 8; and
- n: is 0 or 1 to 8, preferably 0 or 4.

Particularly preferred carboxylic acids of general formula (V) are the free carboxylic acids which corresponds to the carboxylate anion of the catalyst of general formula (III). The carboxylic acid of general formula (V) is introduced into the inventive coating composition by using catalysts C1 previously described which are stabilized by said carboxylic acid.

A particularly preferred carboxylic acid of general formula (V) is neodecanoic acid.

The at least one carboxylic acid of general formula (V), preferably neodecanoic acid, is preferably present in a total amount of 0 to 80 wt.-%, more preferably 30 to 70 wt.-%, very preferably 50 to 60 wt.-%, based in each case on the total amount of catalyst C1 of general formula (III).

### Epoxy functional compound of general formula (VI):

The inventive coating compositions can further comprise at least one epoxy functional compound of general formula (VI)

(X)ₙ-R⁹-Ox (VI)

wherein
- Ox: is an oxirane group;
- R⁹: is an aliphatic hydrocarbyl group containing 2 to 15 carbon atoms and optionally comprising ether groups and/or ester groups;
- n: is 1 to 5; and
- X: are, independently of each other, Ox or a *-Si(R^{g})₃₋ᵥ(R^{h})ᵥ group where v is 0 or 1, R^{g} is an alkoxy group containing 1 to 4 carbon atoms and R^{h} is an alkyl group containing 1 to 4 carbon atoms or an alkoxy group containing 1 to 4 carbon atoms.

R⁹ general formula (VI) is preferably an aliphatic hydrocarbyl group *-(CH₂)₃-O-CH₂-^{#} or a cyclohexyl ethyl group. The symbol * denotes the connection of the aliphatic hydrocarbyl group *-(CH₂)₃-O-CH₂-^{#} to the X residue(s), while the symbol # denotes the connection of the hydrocarbyl group *-(CH₂)₃-O-CH₂-^{#} to the oxirane group. The structure of the epoxy functional compound of general formula (VI) resulting from R⁹ being an aliphatic hydrocarbyl group *-(CH₂)₃-O-CH₂-^{#} is therefore (X)ₙ-(CH₂)₃-O-CH₂-Ox.

n general formula (VI) is preferably 1.

In case the X groups are oxirane groups, the compounds of gerneral formula (VI) are aliphatic diglycidyl ethers, aliphatic polyglycidyl ethers, aliphatic diglycidyl esters and/or aliphatic polygylcidyl esters.

Examples of aliphatic di- or polyglycidyl ethers are 1,4-butanediol-diglycidylether (Heloxy 67), 1,6-hexanediol-diglycidylether (Heloxy modifier HD), trimethylolpropane triglycidylether (Heloxy 48), and neopentylglycol diglycidylether (Heloxy 68), hydrogenated bisphenol A diglycidyl ethers (for example sold under the trade name Epalloy 5000 and Epalloy 5001 from CVC Specialty Chemicals; or YX8000 from Japanese Epoxy Resins Co. Ltd.), cyclohexanedimethylol diglycidylether (for example sold under the trade name Heloxy 107 from Hexion), tricyclodecane dimethanol diglycidylether (for example sold under the trade name EP4088S from Adeka), compound synthesized from 2,2-bis(hydroxymethyl)-1,3-propanediol and 2-(chloromethyl)oxirane (Basocoll OV) or glycerol diglycidylether.

Examples of aliphatic di- or polyglycidyl esters include glycidyl ester of linoleic acid dimer (for example sold under the trade name Erisys GS-120 from CVC Specialty Chemicals), dimer acid diglycidyl ester (for example sold under the trade name Heloxy Modifier 71 from Hexion), and diglycidyl 1,2-cyclohexanedicarboxylate (for example sold under the trade name Epalloy 5200 from CVC Specialty Chemicals).

In case at least one of the X groups is a -Si(R^{g})₃₋ᵥ(R^{h})ᵥ group, the compounds of general formula (VI) are epoxy silanes. According to a preferred embodiment of the inventive coating composition, epoxy functional compounds of general formula (VI) are epoxy silanes. X general formula (VI) is therefore preferably a *-Si(R^{g})₃₋ᵥ(R^{h})ᵥ group where v is 0 or 1, R^{g} is an alkoxy group containing 1 to 4 carbon atoms and R^{h} is an alkoxy group containing 1 carbon atom or an alkyl group containing 1 carbon atom.

Particularly preferred epoxy compounds of general formula (VI) are selected from (3-glycidoxypropyl) trimethoxysilane, dimethoxy(3-glycidyloxypropyl)methylsilane, 2-(3,4-epoxycyclohexyl)ethyltrimethoxysilane, trimethylolpropane triglycidylether and reaction products of 2,2-bis(hydroxymethyl)-1,3-propanediol and 2-(chloromethyl)oxirane very preferably (3-glycidoxypropyl) trimethoxysilane, trimethylolpropane triglycidylether and reaction products of 2,2-bis(hydroxymethyl)-1,3-propanediol and 2-(chloromethyl)oxirane.

The at least one epoxy functional compound of general formula (VI) is preferably present in a total amount of 0 to 20 wt.-%, more preferred 2.5 to 15 wt.-% and most preferred from 5 to 10 wt.-%, based in each case on solids content of the coating composition.

### Further additives:

The coating compositions of the invention may further comprise at least one customary and known coatings additive in typical amounts, i.e., in amounts preferably from 0 to 20 wt.-%, more preferably from 0.005 to 15 wt.-% and particularly from 0.01 to 10 wt.-%, based in each case on the total weight of the coating composition. The before-mentioned weight-percentage ranges apply for the sum of all additives likewise.

Examples of suitable coating additives are (i) UV absorbers; (ii) light stabilizers such as HALS compounds, benzotriazoles or oxalanilides; (iii) rheology modifiers such as sagging control agents (urea crystal modified resins), organic thickeners and inorganic thickeners; (iv) free-radical scavengers; (v) slip additives; (vi) polymerization inhibitors; (vii) defoamers; (viii) wetting agents; (ix) fluorine compounds; (x) adhesion promoters; (xi) leveling agents; (xii) film-forming auxiliaries such as cellulose derivatives; (xiii) fillers, such as nanoparticles based on silica, alumina or zirconium oxide; (xiv) flame retardants; and (xv) mixtures thereof.

Amongst the above additives, the most preferred additives are UV absorbers being preferably present in an amount from 0.25 to 2.5 wt.-%, light stabilizers being preferably present in an amount from 0.25 to 2.5 wt.-% and leveling agents being preferably present in an amount from 0.005 to 2.5 wt.-%, the ranges being based on the total weight of the coating composition.

It is possible, but not desired, that the coating composition further contains at least one further binder which is different from the silane-based compounds R1 and the epoxy-functional compound of formula (VI). A "binder" in the context of the present invention and in accordance with DIN EN ISO 4618:2007-03 is the nonvolatile component of a coating composition, without pigments and fillers. Hereinafter, however, the expression is used principally in relation to particular physically curable polymers which optionally may also be thermally curable, examples being polyurethanes, polyesters, polyethers, polyureas, polyacrylates, polysiloxanes and/or copolymers of the stated polymers. A copolymer in the context of the present invention refers to polymer particles formed from different polymers. This explicitly includes both polymers bonded covalently to one another and those in which the different polymers are bound to one another by adhesion. Combinations of the two types of bonding are also covered by this definition.

However, such binders, if present at all, are contained in the coating composition according to the present invention in amounts preferably less than 10 wt.-% and more preferred less than 5 wt.-%, based on the total weight of silane-based compound R1 present in the coating composition of the present invention. Most preferred the coating composition of the present invention is free from at least one further binder, especially hydroxy-functional polysiloxanes and/or alkoxy-functional polysiloxanes, i.e. said further binder is present in an amount of 0 wt.-%, based on the total weight of the silane-based compound R1.

The additives can comprise further catalysts C3 being different from catalysts C1 and C2 previously described. Suitable further catalysts C3 are, for example, bicyclic tertiary amines. Most preferred bicyclic tertiary amines are 1,5-diaza-bicyclo[4.3.0]non-5-ene (hereinafter referred to as DBN), 1,5-diaza-bicyclo(4,4,0)decene-5 (hereinafter referred to as DBD) or 1,8-diaza-bicyclo[5.4.0]undec-7-ene (herein referred to as DBU) and 1,4-diazabicyclo[2.2.2]octane (herein referred to as DABCO). Among them, DBU and DBN
are preferred. Particularly preferred is DBU. Such bicyclic tertiary amines may be used alone, or two or more of them may be used in combination.

If said further catalyst, preferably DBU, is present, the weight ratio of catalyst C1 to the further catalyst C3 is preferably from 1:1 to 8:1, more preferred from 2:1 to 6:1 and most preferred from 3:1 to 5:1 such as 4:1.

The inventive coating compositions can be formulated as tinted clearcoat composition which, when applied to a substrate, are neither completely transparent and colorless as a clear coating nor completely opaque as a typical pigmented coating. A tinted clear coating is therefore transparent and colored or semi-transparent and colored. The color can be achieved by adding at least one pigment commonly used in coating compositions. Suitable pigments are, for example, organic and inorganic coloring pigments, effect pigments and mixtures thereof. Such color pigments and effect pigments are known to those skilled in the art and are described, for example, in Römpp-Lexikon Lacke und Druckfarben, Georg Thieme Verlag, Stuttgart, New York, 1998, pages 176 and 451. The terms "coloring pigment" and "color pigment" are interchangeable, just like the terms "visual effect pigment" and "effect pigment". Suitable inorganic coloring pigments are selected from (i) white pigments, such as titanium dioxide, zinc white, colored zinc oxide, zinc sulfide, lithopone; (ii) black pigments, such as iron oxide black, iron manganese black, spinel black, carbon black; (iii) color pigments, such as ultramarine green, ultramarine blue, manganese blue, ultramarine violet, manganese violet, iron oxide red, molybdate red, ultramarine red, iron oxide brown, mixed brown, spinel and corundum phases, iron oxide yellow, bismuth vanadate; (iv) filer pigments, such as silicon dioxide, quartz flour, aluminum oxide, aluminum hydroxide, natural mica, natural and precipitated chalk, barium sulphate and (vi) mixtures thereof.

Suitable organic coloring pigments are selected from (i) monoazo pigments such as C.I. Pigment Brown 25, C.I. Pigment Orange 5, 36 and 67, C.I. Pigment Orange 5, 36 and 67, C.I. Pigment Red 3, 48:2, 48:3, 48:4, 52:2, 63, 112 and 170 and C.I. Pigment Yellow 3, 74, 151 and 183; (ii) diazo pigments such as C.I. Pigment Red 144, 166, 214 and 242, C.I. Pigment Red 144, 166, 214 and 242 and C.I. Pigment Yellow 83; (iii) anthraquinone pigments such as C.I. Pigment Yellow 147 and 177 and C.I. Pigment Violet 31; (iv) benzimidazole pigments such as C.I. Pigment Orange 64; (v) quinacridone pigments such as C.I. Pigment Orange 48 and 49, C.I. Pigment Red 122, 202 and 206 and C.I. Pigment Violet 19; (vi) quinophthalone pigments such as C.I. Pigment Yellow 138; (vii) diketopyrrolopyrrole pigments such as C.I. Pigment Orange 71 and 73 and C.I. Pigment Red, 254, 255, 264 and 270; (viii) dioxazine pigments such as C.I. Pigment Violet 23 and 37; (ix) indanthrone pigments such as C.I. Pigment Blue 60; (x) isoindoline pigments such as C.I. Pigment Yellow 139 and 185; (xi) isoindolinone pigments such as C.I. Pigment Orange 61 and C.I. Pigment Yellow 109 and 110; (xii) metal complex pigments such as C.I. Pigment Yellow 153; (xiii) perinone pigments such as C.I. Pigment Orange 43; (xiv) perylene pigments such as C.I. Pigment Black 32, C.I. Pigment Red 149, 178 and 179 and C.I. Pigment Violet 29; (xv) phthalocyanine pigments such as C.I. Pigment Violet 29, C.I. Pigment Blue 15, 15:1, 15:2, 15:3, 15:4, 15:6 and 16 and C.I. Pigment Green 7 and 36; (xvi) aniline black such as C.I. Pigment Black 1; (xvii) azomethine pigments; and (xviii) mixtures thereof.

Suitable effect pigments are selected from the group consisting of (i) plate-like metallic effect pigments such as plate-like aluminum pigments, gold bronzes, fire-colored bronzes, iron oxide-aluminum pigments; (ii) pearlescent pigments, such as metal oxide mica pigments; (iii) plate-like graphite pigments; (iv) plate-like iron oxide pigments; (v) multi-layer effect pigments from PVD films; (vi) liquid crystal polymer pigments; and (vii) mixtures thereof.

The coating compositions preferably comprises the at least one color and/or effect pigment in a total amount of 0.1 to 10 wt.-%, preferably 1 to 4 wt.-%, based on the total weight of the coating composition.

If the inventive coating compositions are formulated as clearcoat compositions, they preferably do not comprise any coloring and/or effect pigments, i.e. the amount of coloring and/or effect pigments is preferably 0 wt.-%, based on the total weight of the coating composition. However, it is likewise possible to add filler materials and matting agents in order to adjust the gloss of the clearcoat materials.

The coating compositions of the invention preferably only contain a rather small amount of crosslinking agents and are very preferably free of any crosslinking agent customarily used in coating compositions. Thus, the coating compositions preferably comprise a total amount of less than 2 wt.-%, more preferably 0 wt.-%, based on the total weight of the coating composition, of at least one crosslinking agent and/or tin containing compound.

Said crosslinking agents which are preferably only contained in small quantities or are not present at all in the coating compositions are amino resins, polyisocyanates, blocked polyisocyanates, polycarbodiimides, photoinitiators, and mixtures thereof. Tin containing compounds which are preferably not contained are tin catalysts. The combination of the silane-based compound R1 with the mixture of catalysts C1 and C2 results in sufficient crosslinking at low curing temperatures without the use of polyisocyanates or melamine resins and tin containing compounds which are undesirable from an ecological standpoint.

The inventive coating compositions can be one-component or a two-component coating composition. If the inventive coating compositions are formulated as one-component composition, traces of water need to be excluded in order to avoid crosslinking reactions during storage of said coating compositions. Preferably, the inventive coating compositions are formulated as a two-component coating composition. Said two-component coating compositions preferably comprise the silane-based compound R1- optionally diluted with an aprotic solvent - and, if present, optional epoxy functional compound of general formula (VI) in a first container and the catalyst(s) C1 and C2 and optionally C3, the optional at least one coating additive and the at least aprotic solvent in a second container. The components of containers 1 and 2 are then mixed prior to use. The formulation of the inventive coating compositions as two-component composition result in higher storage stability because it is not necessary to exclude trace amounts of water.

### Inventive method:

The present invention is also directed to a method of coating a substrate with the inventive coating compositions in which the inventive coating compositions are applied on the substrate, a coating film is formed and said coating film is afterwards cured.

According to a first alternative, the substrate (S) is preferably selected from metallic substrates, metallic substrates coated with a cured electrocoat and/or a cured filler, plastic substrates and substrates comprising metallic and plastic components, especially preferably from metallic substrates. In case of metallic and plastic substrates or substrates comprising metallic and plastic components, said substrates may be pretreated before step (1) of the inventive process in any conventional way - that is, for example, cleaned (for example mechanically and/or chemically) and/or provided with known conversion coatings (for example by phosphating and/or chromating) or surface activating pre-treatments (for example by flame treatment, plasma treatment and corona discharge coming).

In this respect, preferred metallic substrates (S) are selected from iron, aluminum, copper, zinc, magnesium and alloys thereof as well as steel. Preferred substrates are those of iron and steel, examples being typical iron and steel substrates as used in the automobile industry sector. The substrates themselves may be of whatever shape - that is, they may be, for example, simple metal panels or else complex components such as, in particular, automobile bodies and parts thereof.

Preferred plastic substrates (S) are basically substrates comprising or consisting of (i) polar plastics, such as polycarbonate, polyamide, polystyrene, styrene copolymers, polyesters, polyphenylene oxides and blends of these plastics, (ii) synthetic resins such as polyurethane RIM, SMC, BMC and (iii) polyolefin substrates of the polyethylene and polypropylene type with a high rubber content, such as PP-EPDM, and surface-activated polyolefin substrates. The plastics may furthermore be fiber-reinforced, in particular using carbon fibers and/or metal fibers.

As substrates (S) it is also possible, moreover, to use those which contain both metallic and plastics fractions. Substrates of this kind are, for example, vehicle bodies containing plastics parts.

Metallic substrates comprising a cured electrocoating can be obtained by electrophoretically applying an electrocoat material on the metallic substrate (S) and curing said applied material at a temperature of 100 to 250° C, preferably 140 to 220° C for a period of 5 to 60 minutes, preferably 10 to 45 minutes. Before curing, said material can be flashed off, for example, at 15 to 35° C for a period of, for example, 0.5 to 30 minutes and/or intermediately dried at a temperature of preferably 40 to 90° C for a period of, for example, 1 to 60 minutes. Suitable electrocoat materials and also their curing are described in WO 2017/088988 A1, and comprise hydroxy-functional polyether amines as binder and blocked polyisocyanates as crosslinking agent. Before application of the electrocoating material, a conversion coating, such as a zinc phosphate coat, can be applied to the metallic substrate. The film thickness of the cured electrocoat is, for example, 10 to 40 micrometers, preferably 15 to 25 micrometers.

Metallic substrates comprising a cured electrocoating and/or a cured filler can be obtained by applying a filler composition to a metallic substrate (S) optionally comprising a cured electrocoating or to a metallic and/or plastic substrate (S) and curing said filler composition at a temperature of 40 to 100 °C, preferably 60 to 80 °C for a period of 5 to 60 minutes, preferably 3 to 8 minutes. Suitable filler compositions are well known to the person skilled in the art and are, for example, commercially available under the brand name Glasurit from BASF Coatings GmbH. The film thickness of the cured filler is, for example, 30 to 100 micrometers, preferably 50 to 70 micrometers.

According to a second alternative, the substrate in step (1) is a multilayer coating possessing defect sites. This substrate which possesses defect sites is therefore an original finish (i.e. multilayer coating), which is to be repaired or completely recoated. The above-described defect sites in the multilayer coating can be repaired means of the above-described process the invention. For this purpose, the surface to be repaired in the multilayer coating may initially be abraded. The abrading is preferably performed by partially sanding, or sanding off, either the basecoat and the clearcoat layer or all coating layers. Abrading only the basecoat and the clearcoat layer has become established especially in the OEM automotive refinishing segment, where, in contrast to refinishing in a workshop, generally speaking, defects occur only in the basecoat and/or clearcoat region, but do not, in particular, occur in the region of the underlying filler layer. If defects are also encountered in the filler layer, for example scratches which are produced, for example, by mechanical effects and which often extend down to the substrate surface (metallic or plastic substrate), abrading of all coating layers present on the substrate is necessary.

### Step (1):

In step (1) of the inventive method, the inventive coating compositions are applied on the substrate (S). The application of said coating composition to the substrate (S) is understood as follows. The coating composition in question is applied such that the coating film produced in step (2) is disposed on the substrate, but need not necessarily be in direct contact with the substrate. For example, between the coating film and the substrate, there may be other coats disposed. Preferably, the coating composition is applied directly to the substrate (S) in step (1), meaning that the coating film produced in step (2) is in direct contact with the substrate (S).

The inventive coating compositions may be applied by the methods known to the skilled person for applying liquid coating materials, as for example by dipping, knifecoating, spraying, rolling, or the like. Preference is given to employing spray application methods, such as, for example, compressed air spraying (pneumatic application), airless spraying, high-speed rotation, electrostatic spray application (ESTA), optionally in conjunction with hot spray application such as hot air (hot spraying), for example. With very particular preference the coating composition is applied via pneumatic spray application or electrostatic spray application.

### Step (2):

In step (2) of the inventive method, a coating film is formed from the coating composition applied in step (1). The formation of a film from the applied coating composition can be effected, for example, by flashing off the applied coating composition. The term "flashing off" is understood in principle as a designation for the passive or active evaporation of solvents from the coating composition, usually at ambient temperature (that is, room temperature). Since the coating material is still fluid directly after application and at the beginning of flashing, it may undergo flow to form a homogeneous, smooth coating film. Thus, after the flashing phase, a comparatively smooth coating film, which comprises less solvent in comparison with the applied coating composition is obtained. While the film is no longer flowable it is, for example, still soft. In particular, the coating film is not yet cured as described later on below.

The formation of the coating film in step (2) is performed at a temperature of 20 to 60 °C for a duration of 5 to 80 minutes, preferably performed at a temperature of 20 to 35 °C for a duration of 5 minutes to 70 minutes.

### Step (3):

In step (3) of the inventive method, the coating film is cured. The curing of a coating film or composition is understood accordingly to be the conversion of such a film or composition into the service-ready state, in other words into a state in which the substrate furnished with the coating film in question can be transported, stored, and used in its intended manner. A cured coating film, then, is in particular no longer soft, but instead is conditioned as a solid coating film which, even on further exposure to curing conditions as described later on below, no longer exhibits any substantial change in its properties such as hardness or adhesion to the substrate.

In principle the curing is carried out at temperatures of 10 to 180 °C, for example, in particular 40 to 90 °C, for a duration of 5 to 80 minutes, preferably 10 to 50 minutes. Since the inventive method is especially suitable for refinish applications in which low-curing conditions are necessary, the curing in step (3) is preferably performed at a temperature of 20 to 30 °C for a duration of 10 to 70 minutes, preferably 20 to 60 minutes.

Typically layer thicknesses obtained after step (3) range from 15 µm to 80 µm, preferably 20 µm to 70 µm or 30 µm to 65 µm such as 40 µm to 60 µm.

The coating layers produced from the inventive coating compositions have an improved resistance towards humidity conditions when compared to coating compositions comprising DBU instead of the metal alkoxide as co-catalyst. Moreover, curing of said coating compositions can be performed at low temperatures so that the inventive method is especially suitable for refinish applications. The cured coatings show good adhesion, fast sandability and polishability, a good appearance as well as a high scratch and solvent resistance. Additionally, thick coating layers can be produced without the occurrence of incidents or stress. Due to the absence of commonly used isocyanate and melamine crosslinking agents as well as tin catalysts, the inventive process has a good ecologic profile and can also fulfill strict environmental regulations.

What has been said about the inventive coating composition applies mutatis mutandis with respect to further preferred embodiments of the inventive method to prepare a coated substrate.

### Coated substrate:

The result after the end of step (3) of the method of the invention is a coated substrate.

Depending on the substrate material chosen, the coating compositions can be applied in a wide variety of different application areas. Many kinds of substrates can be coated. The coating compositions of the invention are therefore outstandingly suitable for use as decorative and protective coating systems, particularly for bodies of means of transport (especially motor vehicles, such as motorcycles, buses, trucks or automobiles) or parts thereof. The substrates preferably comprise a multilayer coating as used in automotive coating.

The coating compositions of the invention are also suitable for use on constructions, interior and exterior; on furniture, windows and doors; on plastics moldings, especially CDs and windows; on small industrial parts, on coils, containers, and packaging; on white goods; on sheets; on optical, electrical and mechanical components, and on hollow glassware and articles of everyday use.

What has been said about the inventive coating composition and the inventive method applies mutatis mutandis with respect to further preferred embodiments of the coated substrate.

### Multilayer coating:

A multilayer coating consisting of at least two coating layers, at least one of which is formed from a coating composition according to the present invention.

Typically, the multilayer coating comprises at least two coating layers.

A multilayer coating can comprise at least a basecoat layer and a clearcoat layer. The coating compositions of the present invention preferably forms the clearcoat layer.

A multilayer coating can comprise at least one filler coat layer, coated with at least one basecoat layer, which again is coated with at least one clearcoat layer, the clearcoat layer preferably being formed from the coating compositions of the present invention.

Not limited to automotive coating, a multilayer coating can comprise an electrocoat layer, at least one filler coat layer on top of the electrocoat layer, at least one basecoat layer on top of the electrocoat layer and at least one clearcoat layer on top of the basecoat layer, the clearcoat layer preferably being formed from the coating compositions of the present invention.

Said multilayer coatings can be prepared as previously described in connection with the method of the invention. The applied coating layers can either be cured separately or at least two coating layers can be cured simultaneously. With particular preference, the at least one basecoat layer and the clearcoat layer are cured simultaneously. Application, drying or flash off and curing of the coating layers of the multilayer coating can be performed according to methods well known in the state of the art. Suitable electrocoating, filler and basecoat compositions are, for example, commercially available. Suitable substrates have already been previously mentioned in connection with the inventive method.

What has been said about the inventive coating composition, the inventive method and the coated substrate applies mutatis mutandis with respect to further preferred embodiments of the multilayer coating.

### Substrate coated with multilayer coating:

A substrate can be coated with a multilayer coating previously described.

What has been said about the inventive coating composition, the inventive method, the coated substrate and the multilayer coating applies mutatis mutandis with respect to further preferred embodiments of the substrate coated with a multilayer coating.

### Examples

The present invention will now be explained in greater detail through the use of working examples, but the present invention is in no way limited to these working examples. Moreover, the terms "parts", "%" and "ratio" in the examples denote "parts by mass", "mass %" and "mass ratio" respectively unless otherwise indicated.

### 1. Methods of determination:

### 1.1 Solids content (solids, nonvolatile fraction)

The nonvolatile fraction is determined according to DIN EN ISO 3251 (date: June 2008). It involves weighing out 1 g of sample into an aluminum dish which has been dried beforehand, drying it in a drying oven at 130°C for 60 minutes, cooling it in a desiccator and then reweighing it. The residue relative to the total amount of sample used corresponds to the nonvolatile fraction.

### 1.2 Isocyanate content (NCO content)

The isocyanate content was determined by adding an excess of a 2% N,N-dibutylamine solution in xylene to a homogeneous solution of the sample in acetone/N-ethyl pyrrolidone (1:1 vol%), by potentiometric back-titration of the amine excess with 0.1 N hydrochloric acid, in a method based on DIN EN ISO 3251:2008-06, DIN EN ISO 11909:2007-05, and DIN EN ISO 14896:2009-07. The NCO content of the silane-based compound R, based on solids, can be calculated via the fraction of the polymer (solids content) in solution.

### 1.3 Preparation of multilayer coatings (MC)

Steel panels were first pretreated with Gardobond R zinc phosphatation (commercially available from Chemetall GmbH) and afterwards coated with ED-coat (Cathogard 800, commercially available from BASF Coatings GmbH) in a dry film thickness of 17 to 25 µm.

Afterwards, the electrodeposited panels were coated as described below using a pneumatic spray gun at a temperature of 25 ° C and a relative humidity of 65%. A primer (Glasurit 285-270, BASF Coatings GmbH) was applied to the electrodeposited panels such that the film thickness after curing at 60 °C was 50 to 70 µm. The primer was subsequently sanded and a commercially available aqueous basecoat (Glasurit Line 90-1250 Deep Black, BASF Coatings GmbH) was applied such that the film thickness after flash-off till touch dry for approximately 30 minutes was 10 to 20 µm. In the last step the respective clearcoat C-C1 and C-I1 to C-I7 described in Table 1 below was applied on top of the respective basecoat layer and allowed to cure at ambient conditions till touch dry for approximately 15 to 30 minutes. The dry film thickness of the clearcoat layer was 35 to 80 µm. For each clearcoat C-C1 and C-I1 to C-I7, two panels were prepared as previously described.

### 1.4 Test measurements

### 1.4.1 Tack Free Time

The tack free time is determined by the Guillotine test according to DIN EN ISO 9117-5:2012-11. For this test 1.5 g of sea sand is poured on the clear coat. The excess of sand is poured off from the panel. Afterwards, the panel is transferred to a device (Guillotine) that allows to drop the panel from 30 cm above the surface in a self-falling guided manner. The panel drops with the edge on the surface and is afterwards checked for remaining grains of sand. Remain no grains of sand on the coating surface the Guillotine test is considered OK and the coating "tack free".

### 1.4.2 Xylene Test

Seven days after preparation of the multilayer coating as previously described, a large drop (around 2 mL) of Xylene is applied on the coating and again removed after 4 minutes. One hour later the surface is cleaned with PK700 cleanser (available from R-M Automotive Refinish Paints) and the coating is examined. The visibility of the edge of the drop is measured in the range 0 to 5 (where 0 means no visible ring and 5 complete removal of the clear coat)

### 1.4.3 Cross-cut adhesion

Cross-cut adhesion was performed according to DIN EN ISO 2409:2013-06 seven days after preparation of the multilayer coating as previously described.

### 1.4.4 Visual evaluation of blistering, whitening, cracks, swelling and delamination after humidity exposure

Seven days after preparation of the multilayer coating, the respective panel was transferred to a climate chamber with 40 °C and 100% humidity for 240 h. Afterwards, the blistering and whitening was examined visually according to DIN EN ISO 4628-2:2016-07. Evaluation of cracks, swelling and delamination was also performed visually. In case no cracks, swelling or delamination could be detected, the rating for each criteria is "NO". Otherwise, the rating is "YES".

### 2. Preparation of different silane-based compounds R-I1 to R-I4

### 2.1 Silane-based compound R-I1

Silane-based compound R-11 was prepared by reacting 26.30 g hexamethylene diisocyanate (HDI, monomer) with two equivalents N-(n-butyl)-3-aminopropyltrimethoxysilane (73.70 g) at 60 °C without solvents until the remaining NCO content reached 0%.

### 2.2 Silane-based compound R-I2

Silane-based compound R-I2 was prepared by reacting an HDI-based uretdione (35.59 g, DESMODUR XP2840) with three equivalents N-(n-butyl)-3-aminopropyltrimethoxysilane (44.41 g) in 20 g butyl acetate at 60 °C until the remaining NCO content reached 0%.

### 2.3 Silane-based compound R-I3

Silane-based compound R-I3 was prepared by reacting an HDI- trimer (35.84 g, Desmodur N3300) with three equivalents N-(n-butyl)-3-aminopropyltrimethoxysilane (44.16 g) in 20 g butyl acetate at 60 °C until the remaining NCO content reached 0%.

### 2.4 Silane-based compound R-I4

Silane-based compound R-I4 was prepared by reacting 4,4'-methylene bis(cyclohexyl isocyanate) (28.60 g, Desmodur W) with two equivalents N-(n-butyl)-3-aminopropyltrimethoxysilane (51.40 g) in 20 g butyl acetate at 60 °C until the remaining NCO content reached 0%.

### 3. Preparation of clearcoat compositions C-C1 and C-I1 to C-I7

The ingredients of the comparative coating composition C-C1 as well as the ingredients of the inventive coating compositions C-I1 to C-I7 were mixed in the amounts shown in Table 1. First ingredients I were mixed and afterwards pre-mixed ingredients II were added. All amounts are in parts by weight (i.e. in gram). All clearcoat compositions had a non-volatile content of 55.0 %.

**Table 1: Formulation of clearcoat composition C1**

| | Ingredients | NVC** | C-C1 | C-I1* | C-I2* | C-I3* | C-I4* | C-I5* | C-I6* | C-I7* |
|---|---|---|---|---|---|---|---|---|---|---|
| I | Butyl acetate | 0 | 5.22 | 5.82 | 7.02 | 6.36 | 7.86 | 6.78 | 8.70 | 6.18 |
| | Leveling additive BYK 333 | 10 | 1.20 | 1.20 | 1.20 | 1.20 | 1.20 | 1.20 | 1.20 | 1.20 |
| | Catalyst C1 of formula (III) ¹⁾ | 70 | 5.58 | 5.52 | 5.34 | 5.46 | 5.28 | 5.40 | 5.16 | 5.46 |
| | Diazybicycloundecene (DBU) | 100 | 0.60 | 0.00 | 0.00 | 0.00 | 0.00 | 0.00 | 0.00 | 0.60 |
| | Metal alkoxide C2-1 ²⁾ | 100 | 0.00 | 0.00 | 0.00 | 0.00 | 0.00 | 2.82 | 5.46 | 0.00 |
| | Metal alkoxide C2-2 ³⁾ | 97 | 0.00 | 1.68 | 3.24 | 0.00 | 0.00 | 0.00 | 0.00 | 1.62 |
| | Metal alkoxide C2-3 ⁴⁾ | 100 | 0.00 | 0.00 | 0.00 | 2.22 | 4.32 | 0.00 | 0.00 | 0.00 |
| | HALS (Tinuvin 152) | 20 | 3.48 | 3.48 | 3.36 | 3.48 | 3.36 | 3.36 | 3.24 | 3.48 |
| | UV-Absorber (Tinuvin 400) | 85 | 1.08 | 1.08 | 1.08 | 1.08 | 1.02 | 1.08 | 1.02 | 1.08 |
| II | Silane-based compound R-I4 | 55.2 | 98.76 | 97.20 | 94.80 | 96.24 | 93.12 | 95.40 | 91.44 | 96.36 |
| | (3-glycidyloxypropyl)-trimethoxysilane | 100 | 4.08 | 4.02 | 3.96 | 3.96 | 3.84 | 3.96 | 3.78 | 4.02 |

| | | | | | | | | | | |
|---|---|---|---|---|---|---|---|---|---|---|
| * inventive ** NVC = non-volatile content ¹⁾ potassium neodecanoate (contains 56% by weight, based on the total weight of catalyst C1, of neodecanoic acid), ²⁾ metal alkoxide of general formula (IV) with R⁷ = branched C₃ alkyl group, R⁸ = ethyl acetoacetate group, m = 2, n = 4 and M¹ = Ti (titanium content: approximately 17%) ³⁾ metal alkoxide of general formula (IV) with R⁷ = branched C₃ alkyl group, m = 4, n = 4 and M¹ = Ti (titanium content: 29.7%) ⁴⁾ metal alkoxide of general formula (IV) with R⁷ = linear C₄ alkyl group, m = 4, n = 4 and M¹ = Ti (titanium content: 20.6 %) | | | | | | | | | | |

### 4. Results

The results obtained for the multilayer coatings prepared according to point 1.3 using the clearcoat compositions C-C1 and C-I1 to C-I7 are listed in Tables 2 and 3.

**Table 2: Results of on multilayer coatings MC1 to MC8**

| Clearcoat composition | MC1 | MC2* | MC3* | MC4* | MC5* | MC6* | MC7* | MC8* |
|---|---|---|---|---|---|---|---|---|
| | C-C1 | C-I1 | C-I2 | C-I3 | C-I4 | C-I5 | C-I6 | C-I7 |
| Touch dry [min] | 15 | 30 | 30 | 30 | 30 | 30 | 30 | 15 |
| Xylene test ¹⁾ | 0 | 0 | 0 | 0 | 0 | 0 | 0 | 0 |
| Cross-cut adhesion ¹⁾ | 0 | 0 | 1 | 1 | 0 | 1 | 0 | 0 |

| | | | | | | | | |
|---|---|---|---|---|---|---|---|---|
| * inventive ¹⁾ performed 7 days after preparation of the multilayer coating | | | | | | | | |

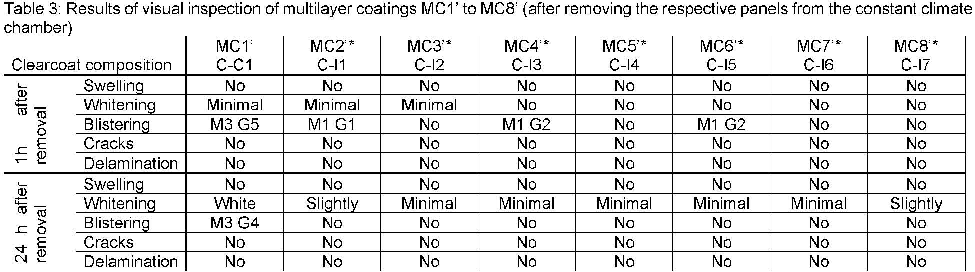

The inventive multilayer coatings MC2 to MC8 comprising a clearcoat layer prepared from the inventive coating composition containing silane-based compound R1 and a mixture of catalyst C1 and metal alkoxide C2 have comparable adhesion properties as the non-inventive multilayer coating MC1 prepared from a clearcoat composition comprising compound silane-based compound R1 and catalyst C1 and DBU (see Table 2). However, the inventive multilayer coatings show significantly improved resistance to humidity conditions (see Table 3). The whitening and blistering observed if the non-inventive multilayer coating MC1 was exposed to humidity conditions is significantly higher than the whitening and blistering observed when the inventive multilayer coatings MC2 to MC7 are exposed to humidity conditions. If the co-catalyst DBU is combined with silane-based compound R1, catalyst C1 and metal alkoxide C2 (multilayer coating MC8), an improved humidity resistance is obtained compared to the multilayer coating MC1 comprising catalyst C1 and DBU, illustrating the beneficial effect the metal alkoxide C2 introduces to the clearcoat system.

In summary, the use of a silane-based compound R1 in combination with a specific catalyst mixture allows to obtain sufficient curing and adhesion of the coating composition without the use of undesirable crosslinkers, like polyisocyanates and melamine resins, and tin containing catalysts. Moreover, the inventive compositions can be cured at ambient temperature, thus rendering them especially suitable for refinish applications.

## Claims

1. Coating composition comprising:
a) at least one silane-based compound R1 having an isocyanate content of less than 1 % and comprising at least one silane group of general formula (I)
*-NR¹-X-SiR²ₐ(OR³)₃₋ₐ (I)
and optionally at least one silane group of general formula (II)
*-N[X-SiR²ₐ(OR³)₃₋ₐ]ₙ[X'-SiR²_{b}(OR³)_{3-b}]ₘ (II)
wherein
X, X' are, independently from each other, linear and/or branched alkylene or cycloalkylene radicals having 1 to 20 carbon atoms,
R¹ is an alkyl group containing 1 to 10 carbon atoms,
R², R³ are, independently from each other, alkyl, cycloalkyl, aryl, or aralkyl groups, it being possible for the carbon chain of the alkyl, cycloalkyl, aryl, or aralkyl groups to be interrupted by nonadjacent oxygen, sulfur or NRₐ groups, where Rₐ is alkyl, cycloalkyl, aryl, or aralkyl,
m, n being, independently from each other, 0 to 1 with the proviso that m+n = 2, and
a, b being, independently from each other, 0 to 2;
b) at least one catalyst C1 of general formula (III)
z [C(R⁴)(R⁵)(R⁶)-(CH₂)ₙ-C(=O)-O⁻] M^{z+} (III)
wherein
R⁴ to R⁶ are, independently from each other, hydrogen or alkyl groups containing 1 to 6 carbon atoms, with the proviso that the sum of the number of carbon atoms in residues R⁴ to R⁶ ranges from 3 to 8;
z being 1 to 4; and
n being 0 or 1 to 8
with the proviso that,
if z = 1, then M is selected from the group consisting of Li, K and Na;
if z = 2, then M is selected from the group consisting of Zn and Zr;
if z = 3, then M is selected from the group consisting of Bi and Al;
if z = 4, then M is selected from the group consisting of Zr and Ti;
c) at least one metal alkoxide C2; and
d) one or more aprotic organic solvents.

2. Coating composition according to claim 1, **characterized in that**
X and X' in formula (I) and (II) represent, independently from each other, a linear alkylene radical having 1 to 10, preferably 1 to 6, more preferably 2 to 5, very preferably 3, carbon atoms; and/or
R¹ in general formula (I) is an alkyl group containing 2 to 8 carbon atoms, preferably 4 to 6 carbon atoms, very preferably 4 carbon atoms; and/or
R³ in general formula (I) and (II) represent, independently from each other, a C₁-C₁₀ alkyl group, preferably a C₁-C₆ alkyl group, very preferably a C₁ alkyl group; and/or
a in formula (I) and (II) is 0; and/or
b in formula (II) is 0.

3. Coating composition according to any of the preceding claims, **characterized in that** the silane-based compound R1 is each present in a total amount of 25 to 95 wt.-%, more preferred 35 to 90 wt.-% and most preferred from 40 to 80 wt.-%, based in each case on the total weight of the coating composition.

4. Coating composition according to any of the preceding claims, **characterized in that** the at least one catalyst C1 of general formula (III) is a neodecanoate and/or ethylhexanoate of potassium, lithium or titanium, preferably potassium (I) neodecanoate, potassium (I) 2-ethylhexanoate, titanium (IV) neodecanoate or titanium (IV) 2-ethylhexanoate.

5. Coating composition according to any of the preceding claims, **characterized in that** the at least one catalyst C1 is present in a total amount of 1 mmol to 50 mmol, preferably 5 mmol to 40 mmol, very preferably 15 to 25 mmol metal per 100 g silane-based compound R1 or R2 solid.

6. Coating composition according to any of claims 1 to 5, **characterized in that** the at least one metal alkoxide C2 is selected from metal alkoxides of the general formula (IV)
M¹[(OR⁷)ₘ(R⁸)ₙ₋ₘ]ₙ (IV)
wherein
R⁷ is a linear or branched C₁ to C₁₀ alkyl group,
R⁸ is a halogen group, an acetylacetonate group, an alkyl acetoacetate group or an ethanolaminato group,
M¹ represents at least one metal selected from silicon, titanium, tantalum, zirconium, boron, aluminum, magnesium or zinc,
m is an integer from 0 to 4, and
n represents a valence of 2 to 5 of M¹.

7. Coating composition according to any of claims 1 to 6, **characterized in that** the metal alkoxide C2 is selected from titanium (IV) isopropoxide and/or titanium (IV) n-butoxide and/or titanium (IV) bis(ethyl acetoacetate)diisopropoxide.

8. Coating composition according to any of claims 1 to 7, **characterized in that** the at least one metal alkoxide C2, preferably metal alkoxides of general formula (IV), is present in a total amount of 2.5. to 40 mmol metal, based in each case on 100 g silane-based compound R1 solid.

9. Coating composition according to any of the preceding claims, characterized that it is a clearcoat composition or a tinted clearcoat composition.

10. Coating composition according to any of the preceding claims, characterized that the coating composition comprises a total amount of less than 2 wt.-%, preferably 0 wt.-%, based on the total weight of the coating composition, of at least one crosslinking agent and/or tin containing compound.

11. Method for forming a coating on a substrate (S) comprising the following steps:
(1) applying a coating composition of any of claims 1 to 10 on the substrate (S);
(2) forming a coating film from the coating composition applied in step (1); and
(3) curing the coating film formed in step (2).

## Patentansprüche

1. Beschichtungszusammensetzung umfassend:
a) wenigstens eine Verbindung R1 auf Silanbasis mit einem Isocyanatgehalt von weniger als 1 % und umfassend wenigstens eine Silangruppe der allgemeinen Formel (I)
*-NR¹-X-SiR²ₐ(OR³)₃₋ₐ (I)
und gegebenenfalls wenigstens eine Silangruppe der allgemeinen Formel (II)s
*-N[X-SiR²ₐ(OR³)₃₋ₐ]ₙ[X'-SiR²_{b}(OR³)_{3-b}]ₘ (II)
wobei
X, X' unabhängig voneinander lineare und/oder verzweigte Alkylen- oder Cycloalkylenreste mit 1 bis 20 Kohlenstoffatomen sind,
R¹ eine Alkylgruppe mit 1 bis 10 Kohlenstoffatomen ist,
R², R³ unabhängig voneinander Alkyl-, Cycloalkyl-, Aryl- oder Aralkylgruppen sind, wobei die Kohlenstoffkette der Alkyl-, Cycloalkyl-, Aryl- oder Aralkylgruppen durch nichtbenachbarte Sauerstoff-, Schwefel- oder NRₐ-Gruppen unterbrochen sein kann, wobei Rₐ Alkyl, Cycloalkyl, Aryl oder Aralkyl ist,
m, n unabhängig voneinander 0 bis 1 sind, mit der Maßgabe, dass m+n = 2, und
a, b unabhängig voneinander für 0 bis 2 sind;
b) wenigstens einen Katalysator C1 der allgemeinen Formel (III)
z [C(R⁴)(R⁵)(R⁶)-(CH₂)ₙ-C(=O)-O⁻] M^{z+} (III)
wobei
R⁴ bis R⁶ unabhängig voneinander Wasserstoff oder Alkylgruppen mit 1 bis 6 Kohlenstoffatomen sind, mit der Maßgabe, dass die Summe der Anzahl von Kohlenstoffatomen in den Resten R⁴ bis R⁶ in dem Bereich von 3 bis 8 liegt;
z 1 bis 4 ist; und
n 0 oder 1 bis 8 ist
mit der Maßgabe, dass
wenn z = 1, M ausgewählt ist aus der Gruppe bestehend aus Li, K und Na;
wenn z = 2, M ausgewählt ist aus der Gruppe bestehend aus Zn und Zr;
wenn z = 3, M ausgewählt ist aus der Gruppe bestehend aus Bi und Al;
wenn z = 4, M ausgewählt ist aus der Gruppe bestehend aus Zr und Ti; und
c) wenigstens ein Metallalkoxid C2; und
d) ein oder mehrere aprotische organische Lösungsmittel.

2. Beschichtungszusammensetzung nach Anspruch 1, **dadurch gekennzeichnet, dass**
X und X' in Formel (I) und (II) unabhängig voneinander einen linearen Alkylenrest mit 1 bis 10, vorzugsweise 1 bis 6, bevorzugter 2 bis 5, sehr bevorzugt 3, Kohlenstoffatomen darstellen; und/oder
R¹ in der allgemeinen Formel (I) eine Alkylgruppe mit 2 bis 8 Kohlenstoffatomen, vorzugsweise 4 bis 6 Kohlenstoffatomen, sehr bevorzugt 4 Kohlenstoffatomen, ist; und/oder
R³ in der allgemeinen Formel (I) und (II) unabhängig voneinander eine C₁-C₁₀-Alkylgruppe, vorzugsweise eine C₁-C₆-Alkylgruppe, sehr bevorzugt eine C₁-Alkylgruppe darstellt; und/oder
a in Formel (I) und (II) 0 ist; und/oder
b in Formel (II) 0 ist.

3. Wässrige Beschichtungszusammensetzung nach einem der vorstehenden Ansprüche, **dadurch gekennzeichnet, dass** die Verbindung R1 auf Silanbasis in einer Gesamtmenge von 25 bis 95 Gew.-%, bevorzugter von 35 bis 90 Gew.-% und höchst bevorzugt von 40 bis 80 Gew.-%, jeweils bezogen auf das Gesamtgewicht der Beschichtungszusammensetzung, vorhanden ist.

4. Beschichtungszusammensetzung nach einem der vorstehenden Ansprüche, **dadurch gekennzeichnet, dass** der wenigstens eine Katalysator C1 der allgemeinen Formel (III) ein Neodecanoat und/oder Ethylhexanoat von Kalium, Lithium oder Titan, vorzugsweise Kalium(I)-neodecanoat, Kalium(I)-2-ethylhexanoat, Titan(IV)-neodecanoat oder Titan(IV)-2-ethylhexanoat, ist.

5. Beschichtungszusammensetzung nach einem der vorstehenden Ansprüche, **dadurch gekennzeichnet, dass** der wenigstens eine Katalysator C1 in einer Gesamtmenge von 1 mmol bis 50 mmol, vorzugsweise 5 mmol bis 40 mmol, sehr bevorzugt 15 bis 25 mmol, Metall pro 100 g Verbindung R1 oder R2 auf Silanbasis als Feststoff vorhanden ist.

6. Beschichtungszusammensetzung nach einem der Ansprüche 1 bis 5, **dadurch gekennzeichnet, dass** das wenigstens eine Metallalkoxid C2 ausgewählt ist aus Metallalkoxiden der allgemeinen Formel (IV)
M¹[(OR⁷)ₘ(R⁸)ₙ₋ₘ]ₙ (IV)
wobei
R⁷ eine lineare oder verzweigte C₁- bis C₁₀-Alkylgruppe ist,
R⁸ eine Halogengruppe, eine Acetylacetonatgruppe, eine Alkylacetoacetatgruppe oder eine Ethanolaminogruppe ist, M¹ wenigstens ein Metall ausgewählt aus Silicium, Titan, Tantal, Zirkonium, Bor, Aluminium, Magnesium oder Zink darstellt,
m eine ganze Zahl von 0 bis 4 ist und
n eine Valenz von 2 bis 5 von M¹ darstellt.

7. Beschichtungszusammensetzung nach einem der Ansprüche 1 bis 6, **dadurch gekennzeichnet, dass** das Metallalkoxid C2 ausgewählt ist aus Titan(IV)-isopropoxid und/oder Titan(IV)-n-butoxid und/oder Titan(IV)-bis(ethylacetoacetat)diisopropoxid.

8. Beschichtungszusammensetzung nach einem der Ansprüche 1 bis 7, **dadurch gekennzeichnet, dass** das wenigstens eine Metallalkoxid C2, vorzugsweise Metallalkoxid der allgemeinen Formel (IV), in einer Gesamtmenge von 2,5 bis 40 mmol Metall, jeweils bezogen auf 100 g Verbindung R1 auf Silanbasis als Feststoff, vorhanden ist.

9. Beschichtungszusammensetzung nach einem der vorstehenden Ansprüche, **dadurch gekennzeichnet, dass** sie eine Klarlackzusammensetzung oder eine getönte Klarlackzusammensetzung ist.

10. Beschichtungszusammensetzung nach einem der vorstehenden Ansprüche, **dadurch gekennzeichnet, dass** die Beschichtungszusammensetzung eine Gesamtmenge von weniger als 2 Gew.-%, vorzugsweise 0 Gew.-%, bezogen auf das Gesamtgewicht der Beschichtungszusammensetzung, an wenigstens einem Vernetzungsmittels und/oder einer zinnhaltigen Verbindung umfasst.

11. Verfahren zur Herstellung einer Beschichtung auf einem Substrat (S), umfassend die folgenden Schritte:
(1) Aufbringen einer Beschichtungszusammensetzung nach einem der Ansprüche 1 bis 10 auf das Substrat (S);
(2) Bilden eines Beschichtungsfilms aus der bei Schritt (1) aufgebrachten Beschichtungszusammensetzung; und
(3) Härten des bei Schritt (2) gebildeten Beschichtungsfilms.

## Revendications

1. Composition de revêtement comprenant :
a) au moins un composé R1 à base de silane ayant une teneur en isocyanate inférieure à 1 % et comprenant au moins un groupe silane de formule générale (I)
*-NR¹-X-SiR²ₐ(OR³)₃₋ₐ (I)
et éventuellement au moins un groupe silane de formule générale (II)
*-N[X-SiR²ₐ(OR³)₃₋ₐ]ₙ[X'-SiR²_{b}(OR³)_{3-b}]ₘ (II)
X, X' étant, indépendamment l'un de l'autre, des radicaux alkylène ou cycloalkylène linéaires et/ou ramifiés ayant 1 à 20 atomes de carbone,
R¹ étant un groupe alkyle contenant 1 à 10 atomes de carbone,
R², R³ étant, indépendamment l'un de l'autre, des groupes alkyle, cycloalkyle, aryle, ou aralkyle, la chaîne carbonée des groupes alkyle, cycloalkyle, aryle ou aralkyle pouvant être interrompue par des groupes oxygène, soufre ou NRₐ non adjacents, Rₐ étant alkyle, cycloalkyle, aryle, ou aralkyle,
m**,** n étant, indépendamment l'un de l'autre, 0 à 1, à condition que m+n = 2, et
a, b étant, indépendamment l'un de l'autre, 0 à 2 ;
b) au moins un catalyseur C1 de formule générale (III)
z [C(R⁴)(R⁵)(R⁶)-(CH₂)ₙ-C(=O)-O⁻] M^{z+} (III)
R⁴ à R⁶ étant, indépendamment les uns des autres, hydrogène ou des groupes alkyle contenant 1 à 6 atomes de carbone, à condition que la somme du nombre d'atomes de carbone dans les radicaux R⁴ à R⁶ se situe dans la plage de 3 à 8 ;
z étant 1 à 4 ; et
n étant 0 ou 1 à 8
à condition que,
si z = 1, alors M est choisi dans le groupe constitué par Li, K et Na ;
si z = 2, alors M est choisi dans le groupe constitué par Zn et Zr ;
si z = 3, alors M est choisi dans le groupe constitué par Bi et Al ;
si z = 4, alors M est choisi dans le groupe constitué par Zr et Ti ;
c) au moins un alcoxyde métallique C2 ; et
d) un ou plusieurs solvants organiques aprotiques.

2. Composition de revêtement selon la revendication 1, **caractérisée en ce que**
X et X' dans les formules (I) et (II) représentent indépendamment l'un de l'autre, un radical alkylène linéaire ayant 1 à 10, de préférence 1 à 6, plus préférablement 2 à 5, très préférablement 3 atomes de carbone ; et/ou
R¹ dans la formule générale (I) est un groupe alkyle contenant 2 à 8 atomes de carbone, de préférence 4 à 6 atomes de carbone, très préférablement 4 atomes de carbone ; et/ou
R³ dans les formules générales (I) et (II) représentent, indépendamment l'un de l'autre, un groupe alkyle en C₁-C₁₀, de préférence un groupe alkyle en C₁-C₆, très préférablement un groupe alkyle en C₁ ; et/ou
a dans les formules (I) et (II) est 0 ; et/ou
b dans la formule (II) est 0.

3. Composition de revêtement selon l'une quelconque des revendications précédentes, **caractérisée en ce que** le composé R1 à base de silane est chacun présent en une quantité totale de 25 à 95 % en poids, plus préférablement 35 à 90 % en poids et le plus préférablement 40 à 80 % en poids, sur la base en chaque cas du poids total de la composition de revêtement.

4. Composition de revêtement selon l'une quelconque des revendications précédentes, **caractérisée en ce que** l'au moins un catalyseur C1 de formule générale (III) est un néodécanoate et/ou éthylhexanoate de potassium, lithium ou titane, de préférence le néodécanoate de potassium (I), le 2-éthylhexanoate de potassium (I), le néodécanoate de titane (IV) ou le 2-éthylhexanoate de titane (IV).

5. Composition de revêtement selon l'une quelconque des revendications précédentes, **caractérisée en ce que** l'au moins un catalyseur C1 est présent en une quantité totale de 1 mmole à 50 mmoles, de préférence de 5 mmoles à 40 mmoles, très préférablement de 15 à 25 mmoles de métal pour 100 g de solide de composé R1 ou R2 à base de silane.

6. Composition de revêtement selon l'une quelconque des revendications 1 à 5, **caractérisée en ce que** l'au moins un alcoxyde métallique C2 est choisi parmi les alcoxydes métalliques de formule générale (IV)
M¹[(OR⁷)ₘ(R⁸)ₙ₋ₘ]ₙ (IV)
dans laquelle
R⁷ est un groupe C₁ à C₁₀ alkyle linéaire ou ramifié,
R⁸ est un groupe halogène, un groupe acétylacétonate, un groupe acétoacétate d'alkyle ou un groupe éthanolaminato, M¹ représente au moins un métal choisi parmi le silicium, le titane, le tantale, le zirconium, le bore, l'aluminium, le magnésium ou le zinc,
m est un entier de 0 à 4 ; et
n représente une valence de 2 à 5 de M¹.

7. Composition de revêtement selon l'une quelconque des revendications 1 à 6, **caractérisée en ce que** l'alcoxyde métallique C2 est choisi parmi l'isopropoxyde de titane (IV) et/ou le n-butoxyde de titane (IV) et/ou le bis(acétoacétate d'éthyle)-diisopropoxyde de titane (IV).

8. Composition de revêtement selon l'une quelconque des revendications 1 à 7, **caractérisée en ce que** l'au moins un alcoxyde métallique C2, de préférence les alcoxydes métalliques de formule générale (IV), est présent en une quantité totale de 2,5 à 40 mmoles de métal, sur la base en chaque cas de 100 g de solide de composé R1 à base de silane.

9. Composition de revêtement selon l'une quelconque des revendications précédentes, **caractérisée en ce qu'**il s'agit d'une composition de revêtement transparent ou d'une composition de revêtement transparent teinté.

10. Composition de revêtement selon l'une quelconque des revendications précédentes, **caractérisée en ce que** la composition de revêtement contient une quantité totale inférieure à 2 % en poids, de préférence 0 % en poids, par rapport au poids total de la composition de revêtement, d'au moins un agent de réticulation et/ou composé contenant de l'étain.

11. Procédé pour la formation d'un revêtement sur un substrat (S) comprenant les étapes suivantes :
(1) application d'une composition de revêtement selon l'une quelconque des revendications 1 à 10 sur le substrat (S) ;
(2) formation d'un film de revêtement à partir de la composition de revêtement appliquée à l'étape (1) ; et
(3) durcissement du film de revêtement formé à l'étape (2).
